# EUROPÄISCHE PATENTSCHRIFT

(11) **EP 2 088 389 B1**
(45) Veröffentlichungstag und Bekanntmachung des Hinweises auf die Patenterteilung: **10.05.2017**
(21) Anmeldenummer: 08101297.3
(22) Anmeldetag: 05.02.2008
(51) Int. Cl.: F25B 15/14, C09K 5/04

(54) **Absorptionskältemaschine**
Absorption cooling machine
Machine de refroidissement à absorption

(43) Veröffentlichungstag der Anmeldung: 12.08.2009
(73) Patentinhaber: Evonik Degussa GmbH, 45128 Essen (DE)
(72) Erfinder: Seiler, Matthias, 64347, Griesheim (DE); Glöckler, Bernd, 63457, Hanau (DE)

(56) Entgegenhaltungen:
- WO-A-93/13367
- WO-A-2004/104496
- WO-A-2005/113702
- WO-A-2008/099726
- DE-A1- 19 511 709
- DE-C- 400 488
- JP-A- 2 298 767
- JP-A- 4 268 176
- JP-A- 7 167 521
- JP-A- 61 129 019
- US-A- 1 882 258
- US-A- 2 802 344

## Beschreibung

Die Erfindung richtet sich auf eine Absorptionskältemaschine mit einem reduzierten Bedarf an mechanischer Energie.

Die klassischen Kältemaschinen beruhen auf einem Kreislauf, in dem ein Kältemittel verdampft wird, wobei durch die vom Kältemittel aufgenommene Verdampfungswärme die Kühlung erzielt wird. Das verdampfte Kältemittel wird dann mit einem Kompressor auf einen höheren Druck gebracht und bei einer höheren Temperatur als bei der Verdampfung kondensiert, wobei die Verdampfungswärme wieder frei wird. Anschließend wird das verflüssigte Kältemittel wieder auf den Druck des Verdampfers entspannt.

Die klassischen Kältemaschinen haben den Nachteil, dass sie viel mechanische Energie für die Kompression des dampfförmigen Kältemittels verbrauchen. Absorptionskältemaschinen weisen demgegenüber bereits einen verringerten Bedarf an mechanischer Energie auf. Absorptionskältemaschinen weisen zusätzlich zu dem Kältemittel, dem Verdampfer und dem Kondensator einer klassischen Kältemaschine noch ein Sorptionsmittel, einen Absorber und einen Desorber auf. Im Absorber wird das verdampfte Kältemittel bei dem Druck der Verdampfung in dem Sorptionsmittel absorbiert und anschließend im Desorber bei dem höheren Druck der Kondensation durch Wärmezufuhr wieder aus dem Sorptionsmittel desorbiert. Die Verdichtung des flüssigen Arbeitsmediums aus Kältemittel und Sorptionsmittel erfordert weniger mechanische Energie als die Kompression des Kältemitteldampfs in einer klassischen Kältemaschine, an Stelle des Verbrauchs an mechanischer Energie tritt die zur Desorption des Kältemittels eingesetzte Wärmeenergie.

US 1,882,258 offenbart eine Absorptionskältemaschine, bei der im Absorber eine flüssige Phase aus dem Absorptionsmittel Wasser und dem Kältemittel Ammoniak durch eine poröse permeable Wand von einer Gasphase getrennt ist, die dampfförmigen Ammoniak und ein Inertgas enthält. Die in diesem Dokument beschriebene Maschine soll ohne Zufuhr mechanischer Energie betrieben werden. Bei der in diesem Dokument beschriebenen Maschine werden Absorber, Desorber, Kondensator und Verdampfer jedoch alle bei dem gleichen Druck betrieben, was einen geringen Wirkungsgrad zur Folge hat. Außerdem kann außer Ammoniak auch Wasserdampf aus der flüssigen Phase durch die poröse Wand in den Verdampfer gelangen und dort zu Störungen, z.B. durch Eisbildung führen.

Das gleiche Problem ergibt sich bei dem in DE 633 146 vorgeschlagenen Verfahren, bei dem im Absorber ein Diaphragma angeordnet ist, durch das ebenfalls das Absorptionsmittel Wasser dampfförmig in den Absorber gelangen kann, sowie dem in WO 2004/104496 vorgeschlagenen Verfahren, das ebenfalls Wasser als Sorptionsmittel verwendet.

DE 195 11 709 offenbart eine Absorptionskältemaschine mit einem Arbeitsmedium, das LiBr bzw. LiBr/ZnBr₂ als nicht flüchtiges Sorptionsmittel und Wasser bzw. Methanol als flüchtiges Kältemittel enthält. Bei dieser Maschine erfolgt keine Kondensation und Verdampfung des Kältemittels. Stattdessen wird die Kühlung durch Pervaporation von Kältemittel aus einem kältemittelreichen Arbeitsmedium, das aus dem Absorber kommt, durch eine hydrophobe Membran in ein kältemittelarmes Arbeitsmedium, das aus dem Desorber kommt, bewirkt. Die Membran ist bei dieser Maschine nicht im Absorber angeordnet.

US 4,152,9001, US 5,873,260 , JP 07-167521 und JP 04-268176 offenbaren Absorptionskältemaschinen, die eine Membran im Desorber enthalten, durch die die Desorption von Kältemittel aus dem Arbeitsmedium erfolgt. In dem Verfahren von US 4,152,9001 kommt es zum Durchtritt von Sorptionsmittel durch die Membran, das in den Verdampfer gelangt. Auch in

US 5,873,260 wird beschrieben, dass das Sorptionsmittel Wasser dampfförmig durch die Membran gelangt.

Es besteht demnach weiterhin ein Bedarf, gegenüber den aus dem Stand der Technik bekannten Absorptionskältemaschinen den Bedarf an mechanischer Energie weiter zu verringern, ohne dass es zu Störungen durch eine Verschleppung von Absorptionsmittel in den Verdampfer der Kältemaschine kommt.

Gegenstand der Erfindung ist eine Absorptionskältemaschine gemäß Anspruch 1. Die Anordnung einer semipermeablen Membran im Absorber, die das dampfförmige Kältemittel von dem flüssigen Arbeitsmedium trennt, in Kombination mit einem nicht flüchtigen Sorptionsmittel ermöglicht eine Absorption auch gegen eine Druckdifferenz zwischen dem dampfförmigen Kältemittel und dem flüssigen Arbeitsmedium, ohne dass dabei Sorptionsmittel in den Dampfraum des Absorbers und in den Verdampfer gelangen kann. Dadurch kann das Kältemittel auch bei einem Druck des flüssigen Arbeitsmediums absorbiert werden, der wesentlich höher liegt als der Druck der Verdampfung, ohne dass dazu eine Kompression des dampfförmigen Kältemittels erforderlich wird und ohne dass es zu Störungen durch die Verschleppung von Sorptionsmittel in den Verdampfer kommt. Durch eine Erhöhung des Drucks des flüssigen Arbeitsmediums im Absorber lässt sich gegenüber den aus dem Stand der Technik bekannten Absorptionskältemaschinen der Bedarf an mechanischer Energie für die Verdichtung des flüssigen Arbeitsmediums verringern.Das Arbeitsmedium enthält als flüchtiges Kältemittel Wasser. Das Arbeitsmedium enthält außerdem ein nicht flüchtiges Sorptionsmittel. Der Begriff nicht flüchtiges Sorptionsmittel bezeichnet dabei ein Sorptionsmittel, dessen Dampfdruck um mehr als den Faktor 10000 geringer als der Dampfdruck des Kältemittels ist. Bevorzugt werden Sorptionsmittel, die bei 20°C einen Dampfdruck von weniger als 10⁻³ mbar, besonders bevorzugt weniger als 10⁻⁶ mbar aufweisen. Als nicht flüchtige Sorptionsmittel werden vorzugsweise polymere oder salzförmige Sorptionsmittel eingesetzt.

Ein für die erfindungsgemäße Absorptionskältemaschine geeignetes, aus dem Stand der Technik bekanntes Arbeitsmedium (wie beschrieben in JP 61-129019) ist eine wässrige Lösung von Lithiumbromid mit Wasser als Kältemittel und Lithiumbromid als nicht flüchtigem Sorptionsmittel. Es wird in der erfindungsgemäßen Absorptionskältemaschine ein Sorptionsmittel verwendet, das eine oder mehrere ionische Flüssigkeiten umfasst. Der Begriff ionische Flüssigkeit bezeichnet dabei ein Salz oder eine Mischung von Salzen aus Anionen und Kationen, wobei das Salz bzw. die Mischung von Salzen einen Schmelzpunkt von weniger als 100°C aufweist. Ionische Flüssigkeiten haben gegenüber konventionellen Sorptionsmitteln, wie Lithiumbromid, den Vorteil, dass im Desorber ein größerer Teil des Kältemittels ausgetrieben werden kann, ohne dass es zu einer Verfestigung des Sorptionsmittels kommt. Die Absorptionskältemaschine kann deshalb mit einer ionischen Flüssigkeit als Sorptionsmittel ohne Störungen mit einer höheren Kapazität des Arbeitsmediums für das Kältemittel betrieben werden, was einen kompakteren Bau der Absorptionskältemaschine ermöglicht.

Vorzugsweise besteht die ionische Flüssigkeit aus einem oder mehreren Salzen von organischen Kationen mit organischen oder anorganischen Anionen. Mischungen aus mehreren Salzen mit unterschiedlichen organischen Kationen und gleichem Anion sind besonders bevorzugt.

Als organische Kationen eignen sich insbesondere Kationen der allgemeinen Formeln (I) bis (V):

R¹R²R³R⁴N⁺ (I)

R¹R²N⁺= CR³R⁴ (II)

R¹R²R³R⁴P⁺ (III)

R¹R²P⁺= CR³R⁴ (IV)

R¹R²R³S⁺ (V)

in denen
R¹,R²_{,}R³,R⁴ gleich oder unterschiedlich sind und Wasserstoff, einen linearen oder verzweigten aliphatischen oder olefinischen Kohlenwasserstoffrest mit 1 bis 30 Kohlenstoffatomen, einen cycloaliphatischen oder cycloolefinischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch eine oder mehrere Gruppen -O-, -NH-, -NR'-, -O-C(O)-, -(O)C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)- oder -N(CH₃)-S(O₂)-, unterbrochenen linearen oder verzweigten aliphatischen oder olefinischen Kohlenwasserstoffrest mit 2 bis 30 Kohlenstoffatomen, einen endständig durch OH, OR', NH₂, N(H)R' oder N(R')₂ funktionalisierten linearen oder verzweigten aliphatischen oder olefinischen Kohlenwasserstoffrest mit 1 bis 30 Kohlenstoffatomen oder einen blockweise oder statistisch aufgebauten Polyetherrest der Formel -(R⁵-O)ₙ-R⁶ bedeuten,
R' ein aliphatischer oder olefinischer Kohlenwasserstoffrest mit 1 bis 30 Kohlenstoffatomen ist,
R⁵ ein 2 bis 4 Kohlenstoffatome enthaltender linearer oder verzweigter Kohlenwasserstoffrest ist,
n von 1 bis 200, vorzugsweise 2 bis 60, ist,
R⁶ Wasserstoff, ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein Rest -C(O)-R⁷ ist,
R⁷ ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,
wobei mindestens einer und vorzugsweise jeder der Reste R¹, R², R³und R⁴ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Als anorganische Anionen eignen sich insbesondere Tetrafluoroborat, Hexafluorophosphat, Nitrat, Sulfat, Hydrogensulfat, Phosphat, Hydrogenphosphat, Dihydrogenphosphat, Hydroxid, Carbonat, Hydrogencarbonat und die Halogenide, vorzugsweise Chlorid.

Als organische Anionen eignen sich insbesondere R^{a}OSO₃⁻, R^{a}SO₃⁻, R^{a}OPO₃²⁻, (R^{a}O)₂PO₂⁻, R^{a}PO₃²⁻, R^{a}COO⁻, R^{a}O⁻, (R^{a}CO)₂N⁻, (R^{a}SO₂)₂N⁻ und NCN⁻ wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist.

In einer bevorzugten Ausführungsform umfasst die ionische Flüssigkeit ein oder mehrere 1,3-Dialkylimidazoliumsalze, wobei die Alkylgruppen besonders bevorzugt unabhängig voneinander ausgewählt sind aus Methyl, Ethyl, n-Propyl, n-Butyl und n-Hexyl. Besonders bevorzugte ionische Flüssigkeiten sind Salze von einem oder mehreren der Kationen 1,3-Dimethylimidazolium, 1-Ethyl-3-methylimidazolium, 1-(n-Butyl)-3-methylimidazolium, 1-(n-Butyl)-3-ethylimidazolium, 1-(n-Hexyl)-3-methyl-imidazolium, 1-(n-Hexyl)-3-ethyl-imidazolium und 1-(n-Hexyl)-3-butyl-imidazolium mit einem der Anionen Chlorid, Acetat, Methylsulfat, Ethylsulfat, Dimethylphosphat oder Methylsulfonat.

In einer weiteren bevorzugten Ausführungsform umfasst die ionische Flüssigkeit ein oder mehrere quaternäre Ammoniumsalze mit einem einwertigen Anion und Kationen der allgemeinen Formel (I) worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃ und
R⁴ ein Alkylrest mit 1 bis 4 Kohlenstoffatomen oder ein Rest (CH₂CHRO)ₙ-H mit n von 1 bis 200 und R = H oder CH₃ ist.
Besonders bevorzugt sind als Anion Chlorid, Acetat, Methylsulfat, Ethylsulfat, Dimethylphosphat oder Methylsulfonat.

Verfahren zur Herstellung der ionischen Flüssigkeiten sind dem Fachmann aus dem Stand der Technik bekannt.

Vorzugsweise werden als Sorptionsmittel ionische Flüssigkeiten verwendet, die bei einer Temperatur von 150°C stabil sind. Bei Verwendung von Wasser als Kältemittel wird vorzugsweise eine ionische Flüssigkeit verwendet, die hydrolysestabil ist. Hydrolysestabile ionische Flüssigkeiten zeigen in einer Mischung mit 50 Gew.-% Wasser bei einer Lagerung bei 80°C innerhalb von 8000 h weniger als 5 % Abbau durch Hydrolyse.

Bevorzugt werden als Sorptionsmittel ionische Flüssigkeiten verwendet, die zusammen mit dem Kältemittel eine nichtideale Mischung mit Dampfdruckerniedrigung des Kältemittels bilden.

Das Arbeitsmedium kann außer dem Sorptionsmittel und dem Kältemittel noch weitere Additive enthalten. Vorzugsweise enthält das Arbeitsmedium noch einen oder mehrere Korrosionsinhibitoren. Dabei können alle aus dem Stand der Technik als für die in der Absorptionskältemaschine verwendeten Werkstoffe geeignet bekannten, nicht flüchtigen Korrosionsinhibitoren verwendet werden.

In einer bevorzugten Ausführungsform der erfindungsgemäßen Absorptionskältemaschine ist die semipermeable Membran im Absorber eine Lösungs-Diffusions-Membran. Eine Lösungs-Diffusions-Membran weist praktisch keine Poren auf. Die selektive Durchlässigkeit der Membran für das Kältemittel beruht bei einer Lösungs-Diffusions-Membran darauf, dass sich das Kältemittel im Material der Membran löst und durch die Membran hindurch diffundiert, während das Sorptionsmittel im Material der Membran unlöslich ist. Die Eignung einer Lösungs-Diffusions-Membran für die erfindungsgemäße Absorptionskältemaschine kann der Fachmann deshalb durch einfache Versuche zur Löslichkeit von Kältemittel und Sorptionsmittel im Material der Membran ermitteln.

Mit Wasser als Kältemittel und einem salzförmigen Sorptionsmittel kann als Lösungs-Diffusions-Membran jede porenfreie Membran verwendet werden, die dem Fachmann als zur Entsalzung von wässrigen Salzlösungen geeignet aus den technischen Gebieten der Dialyse, der Umkehrosmose und der Pervaporation bekannt ist.

Vorzugsweise wird als Material für die LösungsDiffusionsmembranen ein hydrophiles oder hydrophil funktionalisiertes Polymer verwendet, das Polyvinylalkohol, Polyimid, Polybenzimidazol, Polybenzimidazolon, Polyamidhydrazid, Zelluloseester, Zelluloseacetat, Zellulosediacetat, Zellulosetriacetat, Zellulosebutyrat, Zellulosenitrat, Polyharnstoff, Polyfuran, Polyethylenglykol, Poly-(Octyl-Methylsiloxan), Polysiloxan, Poly-Alkyl-Siloxan, Polydialkylsiloxan, Polyester-Polyether-Blockcopolymer, Polysulfon, sulfoniertes Polysulfon, Polyamid, insbesondere aromatisches Polyamid, Polyether, Polyetheretherketon, Polyester, Polyether-Harnstoff-Komposit, Polyamid-Harnstoff-Komposit, Polyethersulfon, Polycarbonat, Polymethylmethacrylat, Polyacrylsäure oder Polyacrylnitril enthält. Ebenso können auch Mischungen oder Copolymere von zwei oder mehr dieser Polymeren eingesetzt werden. Besonders bevorzugt sind Lösungs-Diffusions-Membranen aus Zelluloseacetat, quervernetztem Polyethylenglykol, quervernetztem Polydimethylsiloxan oder einem Polyester-Polyether-Blockcopolymer.

In einer bevorzugten Ausführungsform der erfindungsgemäßen Absorptionskältemaschine ist die semipermeable Membran im Absorber eine mikroporöse Membran. Mikroporöse Membranen im Sinne der Erfindung sind Membranen, die durch die Membran reichende Poren mit einem kleinsten Durchmesser im Bereich von 0,3 nm bis 100 µm aufweisen. Vorzugsweise weist die Membran Poren im Bereich von 0,3 nm bis 0,1 µm auf.

Vorzugsweise wird eine mikroporöse Membran verwendet, die vom Arbeitsmedium aus Sorptionsmittel und Kältemittel im Absorber nicht benetzt wird. Der Begriff Benetzen steht dabei für einen Kontaktwinkel zwischen Arbeitsmedium und mikroporöser Membran von weniger als 90 Grad, der zu einem Eindringen von Arbeitsmedium in Poren der Membran durch Kapillarkräfte führt. Vorzugsweise beträgt der Kontaktwinkel zwischen Arbeitsmedium und mikroporöser Membran mehr als 120 Grad, besonders bevorzugt mehr als 140 Grad. Durch die Verwendung einer nicht benetzenden mikroporösen Membran kann auch bei einem gegenüber der Dampfseite erhöhten Druck auf der Seite des flüssigen Arbeitsmediums ein Fluss des flüssigen Arbeitsmediums durch die Poren der Membran auf die Dampfseite der Membran verhindert werden. Die Eignung einer mikroporösen Membran für die erfindungsgemäße Absorptionskältemaschine kann der Fachmann deshalb durch die Bestimmung des Kontaktwinkels zwischen dem Arbeitsmedium und der Membran ermitteln.

Mit Wasser als Kältemittel wird vorzugsweise als semipermeable Membran eine hydrophobe mikroporöse Membran verwendet. Geeignete hydrophobe mikroporöse Membranen sind dem Fachmann auf dem technischen Gebiet der Funktionsbekleidung als wasserdichte und wasserdampfdurchlässige Membranen bekannt. Vorzugsweise werden hydrophobe mikroporöse Membranen aus Polyethylen, Polypropylen, Polytetrafluorethylen, Polyvinylidenfluorid oder fluoralkylmodifizierten Polymeren verwendet. Ebenso können auch Mischungen oder Copolymere von zwei oder mehr dieser Polymeren eingesetzt werden. Ebenfalls geeignet sind anorganische hydrophobe mikroporöse Membranen oder Kompositmembranen mit einem anorganischen hydrophoben mikroporösen Material, beispielsweise Membranen, deren Poren durch Silicalit oder hydrophobierte Kieselsäure gebildet werden.

Vorzugsweise ist die semipermeable Membran auf einer porösen Stützschicht angeordnet. Durch die Anordnung auf einer porösen Stützschicht kann eine mechanisch stabile Membraneinheit auch mit einer dünnen semipermeablen Membran erreicht werden. Dies ermöglicht einen rascheren Stofftransport durch die Membran und damit eine kleinere und kompaktere Ausführung des Absorbers. Vorzugsweise wird die Stützschicht auf der an die Dampfphase angrenzenden Seite der semipermeablen Membran angeordnet. Eine solche Anordnung der Stützschicht führt zu einem geringeren Stofftransportwiderstand als eine Anordnung der Stützschicht auf der dem flüssigen Arbeitsmedium zugewandten Seite der Membran.

Die poröse Stützschicht kann sowohl aus anorganischen als auch aus organischen Materialien bestehen. Vorzugsweise wird die Membran auf einer porösen Stützschicht aus einem hydrophoben Polymer, insbesondere aus einem Polyolefin, einem Polyester oder Polyvinylidenfluorid, angeordnet. Die Stützschicht kann zusätzlich noch Verstärkungen, z.B. durch Gewebelagen, enthalten.

In einer bevorzugten Ausführungsform ist die semipermeable Membran im Absorber in Form von Hohlfasern angeordnet. Die Ausführung der Membran in Form von Hohlfasern ermöglicht eine besonders kompakte Bauweise des Absorbers und einen Betrieb des Absorbers mit einem höheren Druckunterschied zwischen der Dampfphase und der Flüssigphase im Absorber.

Die erfindungsgemäße Absorptionskältemaschine kann zusätzlich auch eine Membran im Desorber enthalten, durch die die Desorption von Kältemittel aus dem Arbeitsmedium erfolgt. Im Desorber können dabei prinzipiell alle Membranen eingesetzt werden, die sich als semipermeable Membran für den Absorber der erfindungsgemäßen Absorptionskältemaschine eignen. Die Verwendung einer Membran im Desorber ermöglicht auch den Einsatz von Arbeitsmedien, die in der Desorption zum Schäumen neigen.

Die erfindungsgemäße Absorptionskältemaschine kann auch in Form einer mehrstufigen Kältemaschine ausgeführt werden, wie in F. Ziegler, R. Kahn, F. Summerer, G. Alefeld "Multi-Effect absorption chillers", Rev. Int. Froid 16 (1993) 301-311 beschrieben.

Die erfindungsgemäße Absorptionskältemaschine eignet sich wegen der kompakten Bauweise und des geringen Bedarfs an mechanischer Energie besonders zum mobilen Einsatz, insbesondere in Kraftfahrzeugen und Schiffen. Darüber hinaus eignet sich die erfindungsgemäße Absorptionskältemaschine auch besonders zur Klimatisierung von Gebäuden, da sie besonders geräuscharm betrieben werden kann und eine effiziente Klimatisierung mit Solarenergie möglich macht.

## Patentansprüche

1. Absorptionskältemaschine, umfassend ein Arbeitsmedium, enthaltend ein nicht flüchtiges Sorptionsmittel und ein flüchtiges Kältemittel, und einen Absorber, in dem eine Dampfphase enthaltend Kältemittel und eine Flüssigphase enthaltend Sorptionsmittel durch eine Membran voneinander getrennt sind,
wobei das Kältemittel Wasser ist, **dadurch gekennzeichnet, dass** das Sorptionsmittel eine oder mehrere ionische Flüssigkeiten umfasst und die Membran eine semipermeable Membran ist, die für das Kältemittel durchlässig und für das Sorptionsmittel undurchlässig ist.

2. Absorptionskältemaschine nach Anspruch 1,
**dadurch gekennzeichnet,**
**dass** die ionische Flüssigkeiten in einer Mischung mit 50 Gew.-% Wasser bei einer Lagerung bei 80°C innerhalb von 8000 h weniger als 5 % Abbau durch Hydrolyse zeigt.

3. Absorptionskältemaschine nach Anspruch 1 oder 2,
**dadurch gekennzeichnet,**
**dass** die ionische Flüssigkeit zusammen mit dem Kältemittel eine nichtideale Mischung mit Dampfdruckerniedrigung des Kältemittels bildet.

4. Absorptionskältemaschine nach einem der Ansprüche 1 bis 3,
**dadurch gekennzeichnet,**
**dass** die ionische Flüssigkeit aus Salzen von organischen Kationen mit organischen oder anorganischen Anionen besteht.

5. Absorptionskältemaschine nach Anspruch 4,
**dadurch gekennzeichnet,**
**dass** die ionische Flüssigkeit ein oder mehrere 1,3-Dialkylimidazoliumsalze umfasst.

6. Absorptionskältemaschine nach Anspruch 4,
**dadurch gekennzeichnet,**
**dass** die ionische Flüssigkeit ein oder mehrere quaternäre Ammoniumsalze der allgemeinen Formel R¹R²R³R⁴N⁺A⁻ umfasst, worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃,
R⁴ ein Alkylrest mit 1 bis 4 Kohlenstoffatomen oder ein Rest (CH₂CHRO)ₙ-H mit n von 1 bis 200 und R = H oder CH₃ und
A⁻ ein einwertiges Anion ist.

7. Absorptionskältemaschine nach einem der vorangehenden Ansprüche,
**dadurch gekennzeichnet,**
**dass** die semipermeable Membran eine Lösungs-Diffusions-Membran ist.

8. Absorptionskältemaschine nach einem der vorangehenden Ansprüche,
**dadurch gekennzeichnet,**
**dass** die semipermeable Membran eine mikroporöse Membran ist, die vom Arbeitsmedium nicht benetzt wird.

9. Absorptionskältemaschine nach Anspruch 8,
**dadurch gekennzeichnet,**
**dass** die semipermeable Membran eine hydrophobe mikroporöse Membran ist.

10. Absorptionskältemaschine nach einem der vorangehenden Ansprüche,
**dadurch gekennzeichnet,**
**dass** die semipermeable Membran auf einer porösen Stützschicht angeordnet ist.

11. Absorptionskältemaschine nach Anspruch 10,
**dadurch gekennzeichnet,**
**dass** die Stützschicht auf der an die Dampfphase angrenzenden Seite der semipermeablen Membran angeordnet ist.

12. Absorptionskältemaschine nach einem der vorangehenden Ansprüche,
**dadurch gekennzeichnet,**
**dass** die semipermeable Membran im Absorber in Form von Hohlfasern angeordnet ist.

## Claims

1. Absorption refrigeration machine comprising a working medium, containing a nonvolatile sorption medium and a volatile refrigerant, and an absorber in which a vapour phase containing refrigerant and a liquid phase containing sorption medium are separated from one another by a membrane, wherein the refrigerant is water, **characterized in that** the sorption medium comprises one or more ionic liquids and the membrane is a semipermeable membrane which is permeable to the refrigerant and impermeable to the sorption medium.

2. Absorption refrigeration machine according to Claim 1, **characterized in that** the ionic liquids displays less than 5% degradation by hydrolysis in a mixture with 50% by weight of water on storage at 80°C for 8000 h.

3. Absorption refrigeration machine according to Claim 1 or 2, **characterized in that** the ionic liquid forms a nonideal mixture with the refrigerant with lowering of the vapour pressure of the refrigerant.

4. Absorption refrigeration machine according to any one of Claims 1 to 3, **characterized in that** the ionic liquid consists of salts of organic cations with organic or inorganic anions.

5. Absorption refrigeration machine according to Claim 4, **characterized in that** the ionic liquid comprises one or more 1,3-dialkylimidazolium salts.

6. Absorption refrigeration machine according to Claim 4, **characterized in that** the ionic liquid comprises one or more quaternary ammonium salts of the general formula R¹R²R³R⁴N⁺A⁻, where
R¹ is an alkyl radical having from 1 to 20 carbon atoms, R² is an alkyl radical having from 1 to 4 carbon atoms, R³ is a (CH₂CHRO)ₙ-H radical where n is from 1 to 200 and R = H or CH₃,
R⁴ is an alkyl radical having from 1 to 4 carbon atoms or a (CH₂CHRO)ₙ-H radical where n is from 1 to 200 and R = H or CH₃ and
A- is a monovalent anion.

7. Absorption refrigeration machine according to any one of the preceding claims, **characterized in that** the semipermeable membrane is a solution diffusion membrane.

8. Absorption refrigeration machine according to any one of the preceding claims, **characterized in that** the semipermeable membrane is a microporous membrane which is not wetted by the working medium.

9. Absorption refrigeration machine according to Claim 8, **characterized in that** the semipermeable membrane is a hydrophobic microporous membrane.

10. Absorption refrigeration machine according to any one of the preceding claims, **characterized in that** the semipermeable membrane is arranged on a porous support layer.

11. Absorption refrigeration machine according to Claim 10, **characterized in that** the support layer is arranged on the side of the semipermeable membrane which is in contact with the vapour phase.

12. Absorption refrigeration machine according to any one of the preceding claims, **characterized in that** the semipermeable membrane is arranged in the absorber in the form of hollow fibres.

## Revendications

1. Machine de refroidissement à absorption, comprenant un milieu de travail, contenant un agent de sorption non volatil et un agent réfrigérant volatil, et un absorbeur, dans lequel une phase gazeuse contenant l'agent réfrigérant et une phase liquide contenant l'agent de sorption sont séparées l'une de l'autre par une membrane, l'agent réfrigérant étant l'eau, **caractérisée en ce que** l'agent de sorption comprend un ou plusieurs liquides ioniques et la membrane est une membrane semi-perméable qui est perméable pour l'agent réfrigérant et imperméable pour l'agent de sorption.

2. Machine de refroidissement à absorption selon la revendication 1, **caractérisée en ce que** les liquides ioniques présente dans un mélange avec 50 % en poids d'eau lors d'un stockage à 80 °C pendant 8 000 h moins de 5 % de décomposition par hydrolyse.

3. Machine de refroidissement à absorption selon la revendication 1 ou 2, **caractérisée en ce que** le liquide ionique forme conjointement avec l'agent réfrigérant un mélange non idéal avec abaissement de la pression de vapeur de l'agent réfrigérant.

4. Machine de refroidissement à absorption selon l'une quelconque des revendications 1 à 3, **caractérisée en ce que** le liquide ionique est constitué de sels de cations inorganiques avec des anions organiques ou inorganiques.

5. Machine de refroidissement à absorption selon la revendication 4, **caractérisée en ce que** le liquide ionique comprend un ou plusieurs sels de 1,3-dialkylimidazolium.

6. Machine de refroidissement à absorption selon la revendication 4, **caractérisée en ce que** le liquide ionique comprend un ou plusieurs sels d'ammonium quaternaires de formule générale R¹R²R³R⁴N⁺A⁻, dans laquelle
R¹ représente un radical alkyle de 1 à 20 atomes de carbone,
R² représente un radical alkyle de 1 à 4 atomes de carbone,
R³ représente un radical (CH₂CHRO)ₙ-H avec n de 1 à 200 et R = H ou CH₃,
R⁴ représente un radical alkyle de 1 à 4 atomes de carbone, ou un radical (CH₂CHRO)ₙ-H avec n de 1 à 200 et R = H ou CH₃, et
A- représente un anion monovalent.

7. Machine de refroidissement à absorption selon l'une quelconque des revendications précédentes, **caractérisée en ce que** la membrane semi-perméable est une membrane à solution-diffusion.

8. Machine de refroidissement à absorption selon l'une quelconque des revendications précédentes, **caractérisée en ce que** la membrane semi-perméable est une membrane microporeuse qui n'est pas mouillée par le milieu de travail.

9. Machine de refroidissement à absorption selon la revendication 8, **caractérisée en ce que** la membrane semi-perméable est une membrane microporeuse hydrophobe.

10. Machine de refroidissement à absorption selon l'une quelconque des revendications précédentes, **caractérisée en ce que** la membrane semi-perméable est agencée sur une couche support poreuse.

11. Machine de refroidissement à absorption selon la revendication 10, **caractérisée en ce que** la couche support est agencée sur le côté adjacent à la phase gazeuse de la membrane semi-perméable.

12. Machine de refroidissement à absorption selon l'une quelconque des revendications précédentes, **caractérisée en ce que** la membrane semi-perméable est agencée dans l'absorbeur sous la forme de fibres creuses.
